Europäisches Patentamt

European Patent Office

Office européen des brevets

(11) Numéro de publication : **0 452 241 A1**

(12) # DEMANDE DE BREVET EUROPEEN

(21) Numéro de dépôt : **91470008.3**

(22) Date de dépôt : **05.04.91**

(51) Int. Cl.⁵ : **G01L 5/04**

(30) Priorité : 09.04.90 FR 9004639
08.03.91 FR 9102849

(43) Date de publication de la demande :
16.10.91 Bulletin 91/42

(84) Etats contractants désignés :
**AT BE CH DE ES FR GB IT LI LU NL SE**

(71) Demandeur : **INSTITUT DE RECHERCHES DE LA SIDERURGIE FRANCAISE (IRSID)**
**Immeuble Elysées-la-Défense 19, Le Parvis La Défense 4**
**F-92800 Puteaux (FR)**
Demandeur : **TECHMETAL PROMOTION**
**Domaine de l'Irsid Voie Romaine**
**F-57210 Maizieres-Lès-Metz (FR)**

(72) Inventeur : **Baseotto, Gérard**
**3, rue Principale**
**F-57117 Mantoy-Flanville (FR)**
Inventeur : **Siener, Pierre**
**44, Grand'Rue**
**F-57100 Manom (FR)**

(74) Mandataire : **Ventavoli, Roger et al**
**TECHMETAL PROMOTION Domaine de l'IRSID Voie romaine BP 321**
**F-57213 Maizières-lès-Metz Cédex (FR)**

(54) **Procédé et dispositif de détermination de la tension d'une bande métallique.**

(57)     La présente invention a pour objet un procédé de détermination de la tension d'une zone d'une bande métallique maintenue entre deux appuis, telle qu'une bande en défilement subissant un laminage, caractérisé en ce qu'on réalise une percussion de ladite zone de la bande par l'élément de frappe d'un corps de frappe, en ce que, avant la percussion, on imprime audit élément de frappe une vitesse d'impact reproductible, en ce que, après la percussion, on détermine l'énergie dudit élément de frappe qui a été absorbée par la bande lors de ladite percussion, et en ce qu'on corrèle le résultat de cette détermination à la tension de ladite zone de ladite bande.

Elle a également pour objet un dispositif pour la mise en oeuvre de ce procédé, caractérisé en ce qu'il comprend un ensemble de corps de frappe (30), des moyens (50) pour leur réarmement et des moyens de déclenchement (45) de ces corps de frappe.

EP 0 452 241 A1

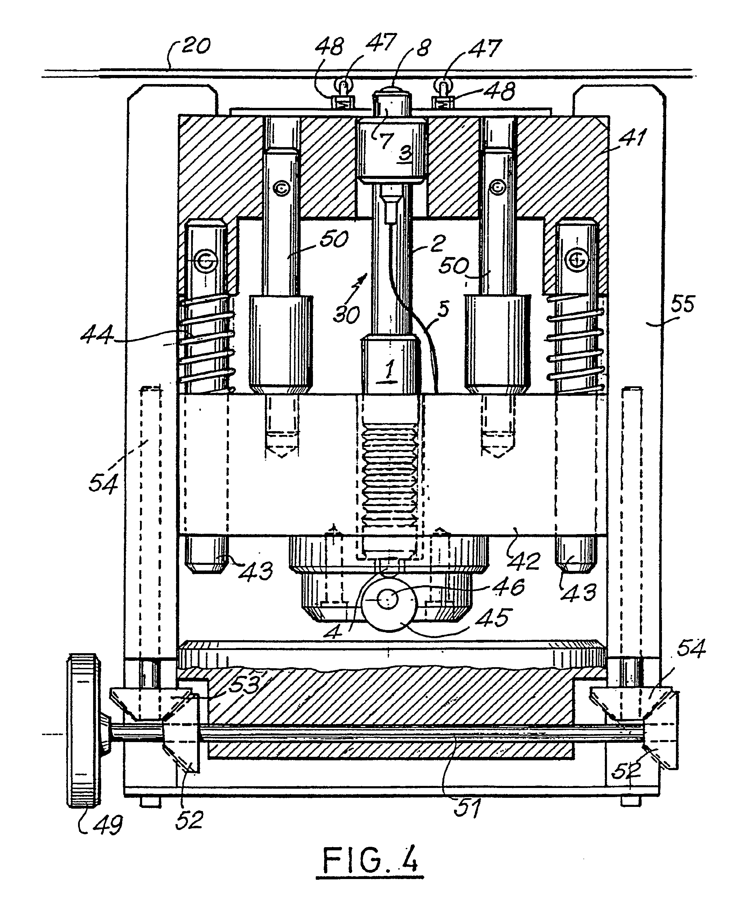

<u>FIG.4</u>

La présente invention concerne un procédé de détermination de la tension d'une bande métallique en défilement maintenue entre deux appuis, telle qu'une bande d'acier subissant par exemple un laminage.

Lors du laminage à froid d'un produit métallique mince, tel qu'une bande d'acier destinée à la fabrication de tôles, l'homogénéité de la tension de la bande sur toute sa largeur est l'un des facteurs qui conditionnent l'obtention d'un produit final de bonne qualité. Une tension non homogène de la bande se traduit en effet par des défauts de planéité du produit.

Les dispositifs actuellement connus qui permettent de mesurer la tension de la bande en cours de laminage et de contrôler sa planéité ne prennent pas en compte la tension au voisinage des rives de la bande. Celle-ci doit pourtant être évaluée par l'opérateur, de manière à vérifier qu'elle est égale sur les deux rives. A la connaissance du demandeur, cette évaluation a déjà été effectuée de la manière suivante : l'opérateur frappe successivement les deux rives au moyen d'un bâton qu'il tient en main, avec une force aussi égale que possible lors des deux essais, et il compare les rebonds du bâton sur chaque rive, qui sont fonction de leur tension. Les principales insuffisances de cette méthode sont évidentes. Seule une estimation grossière et qualitative de la différence de tension entre les rives est possible, du fait de la difficulté pour l'opérateur à reproduire exactement la même frappe à chaque essai et du caractère subjectif de l'évaluation des rebonds du bâton. De plus, cette opération nécessite, pour dégager l'espace nécessaire à son exécution, la mise hors service de la jauge de mesure de l'épaisseur du produit si, comme c'est parfois le cas sur les laminoirs de type "SENDZIMIR", cette jauge de mesure opère par contact avec la bande. Enfin l'opérateur doit s'approcher très près de la bande en défilement, ce qui pose des problèmes de sécurité.

Par ailleurs, ce n'est pas seulement la valeur de la tension subie par la bande en un point donné qui est intéressante mais on peut également désirer connaître la répartition de la tension en divers points répartis sur l'ensemble de la largeur de la bande.

Le but de l'invention est de proposer une méthode et un dispositif simples d'évaluation de la tension locale d'une bande en cours de laminage reposant sur des critères objectifs et donnant un résultat fiable et reproductible, de manière à permettre un réglage à l'identique de la tension sur l'ensemble de la largeur du produit, tout en ne perturbant pas la marche du laminoir, et applicable en particulier à la mesure de cette tension sur les rives de la bande.

A cet effet, l'invention a pour objet un procédé de détermination de la tension d'une zone d'une bande métallique maintenue entre deux appuis, telle qu'une bande d'acier en défilement subissant un laminage, caractérisé en ce qu'on réalise une percussion de ladite zone de la bande par un élément de frappe, en ce que, avant la percussion, on imprime audit élément de frappe une vitesse d'impact reproductible, en ce que, après la percussion, on détermine l'énergie dudit élément de frappe qui a été absorbée par la bande lors de ladite percussion, et en ce qu'on corrèle le résultat de cette détermination à la tension de ladite zone de ladite bande. Préférentiellement, cette détermination est effectuée par la mesure de la hauteur maximale atteinte par l'élément de frappe après avoir rebondi sur la bande, si, avant percussion, l'élément de frappe avait une trajectoire descendante, ou par la mesure des vitesses V1 et V2 de l'élément de frappe respectivement avant et juste après la percussion, ou de grandeurs représentatives de V1 et V2, et par le calcul du rapport

$$\frac{V1}{V2}$$

ou d'une grandeur qui lui est liée.

Préférentiellement, on utilise un ensemble de corps de frappe disposés selon au moins une rangée sensiblement perpendiculaire au sens de défilement de la bande, et on réalise une détermination de la distribution de la tension sur la largeur de la bande.

Ce procédé permet de faire une mesure sur toute la largeur de la bande et en particulier sur ses rives ; préférentiellement, les différents corps de frappe sont actionnés séparément ; chaque mesure est ainsi effectuée isolément si bien que les vibrations et perturbations engendrées dans la tôle par une mesure n'ont pas d'influence sur les autres mesures effectuées dans des zones voisines, le temps séparant deux mesures successives étant suffisamment grand pour que les perturbations apportées par une première mesure soient pratiquement négligeables lorsque l'on effectue la mesure suivante.

Selon une autre caractéristique de l'invention, les corps de frappe sont disposés selon plusieurs rangées adjacentes, les corps de frappe d'une rangée étant décalés transversalement par rapport aux corps de frappe de la rangée adjacente ; cette disposition permet de diminuer le pas transversal de mesure qui est limité, dans le cas d'une seule rangée, à la distance séparant deux corps de frappe voisins.

L'invention a également pour objet un dispositif pour la détermination de la tension d'une zone d'une bande métallique maintenue entre deux appuis, telle qu'une bande d'acier en défilement subissant un laminage, dispositif constitué par un corps de frappe comportant :

    – un tube de guidage à l'intérieur duquel peut librement coulisser un élément de frappe dont la partie terminale est destinée à percuter la surface de la bande métallique ;

    – des moyens permettant d'imprimer audit élément de frappe une vitesse initiale donnée garantissant une vitesse reproductible de l'élément de frappe au moment où il percute la bande ;

– des moyens de détermination de l'énergie de l'élément de frappe absorbée par la bande lors de leur percussion ; et

– des moyens de restitution à l'opérateur du résultat de cette détermination;

dispositif caractérisé en ce que la partie terminale de l'élément de frappe possède une symétrie de révolution et est montée libre en rotation autour de son axe de révolution, ledit axe étant orienté transversalement à la direction de déplacement de l'élément de frappe dans le tube de guidage.

L'invention a également pour objet un dispositif permettant de mesurer la tension de la bande en plusieurs points répartis sur la largeur de la bande. Ce dispositif comporte un ensemble de corps de frappe, des moyens de réarmement des corps de frappe et des moyens de déclenchement des corps de frappe. Avantageusement, les moyens de réarmement des corps de frappe comprennent au moins un vérin solidaire d'un élément mobile de réarmement de chaque corps de frappe.

Selon une autre caractéristique de l'invention, le déclenchement de chaque corps de frappe est obtenu au moyen d'une came, les cames de commande des corps de frappe d'une rangée étant portées par un arbre disposé transversalement par rapport à la bande. Préférentiellement les différentes cames d'un arbre sont décalées les unes par rapport aux autres. Cette disposition permet d'obtenir une commande successive des différents corps de frappe d'une rangée.

Comme on l'aura compris, l'invention repose sur l'évaluation, d'une manière qui peut n'être que qualitative mais doit être reproductible, de l'élasticité que confère la tension de la bande à la zone sur laquelle l'essai est effectué. En répétant l'essai dans des conditions identiques sur plusieurs points de la largeur de la bande, on peut déterminer si cette tension est homogène sur la largeur du produit et notamment en extrême rive. Dans le cas contraire, on doit alors modifier les réglages de l'installation de la façon appropriée pour obtenir cette homogénéité.

Lorsqu'un projectile percute une bande métallique de faible épaisseur, tendue entre deux appuis, avec une vitesse donnée au moment du choc, puis rebondit, l'énergie absorbée pendant le choc peut être corrélée, par exemple, à la vitesse avec laquelle le projectile quitte la bande. Dans le cas où, avant le choc, le projectile avait une trajectoire descendante, la hauteur maximale qu'il atteint après son rebond peut également être représentative de l'énergie absorbée pendant le choc, toujours pour une vitesse donnée du projectile avant le choc. Cette énergie absorbée dépend de deux séries de facteurs.

Certains facteurs sont liés au projectile. Ce sont d'une part ses caractéristiques propres : sa masse, sa matière, sa compliance, sa forme, et d'autre part les caractéristiques de son mouvement initial : vitesse et direction. Les autres facteurs sont liés à la bande. Ce sont essentiellement sa matière qui possède une dureté et une élasticité intrinsèques, et sa tension entre ses deux appuis. Toutes choses étant égales par ailleurs, une faible tension de la bande provoque l'absorption d'une plus grande partie de l'énergie du projectile lors du choc, par rapport à une tension de la bande plus élevée. Cette plus grande absorption d'énergie se traduit par une vitesse après le choc et une hauteur maximale de rebond (si celui-ci est ascendant) plus faibles pour le projectile.

C'est sur ce principe que repose le procédé selon l'invention. Un essai de rebondissement d'un projectile est effectué sur une zone de produit donnée, telle que le voisinage d'une des rives d'une bande en cours de laminage. Le résultat de l'essai est noté sous forme du rapport entre les vitesses du projectile avant et après le choc, ou sous forme de la hauteur maximale à laquelle rebondit le projectile. Le même essai est ensuite effectué sur l'autre rive avec le même appareillage, ou un appareillage identique et dans les mêmes conditions, à savoir que la vitesse à laquelle le projectile percute la bande doit être identique à celle de l'essai précédent. Comme la nuance du métal testée est la même dans les deux essais, les facteurs liés aux propriétés intrinsèques du métal interviennent de façon semblable sur les résultats des deux essais. La comparaison de ces résultats ne reflète donc bien que la différence entre les élasticités locales de la bande et donc entre ses tensions, aux points où sont effectuées les mesures. Bien entendu, l'essai peut être effectué non seulement au voisinage des rives mais aussi en divers autres points de la largeur de la bande de manière à obtenir une estimation de la variation de la tension de la bande sur toute sa largeur. L'application à la comparaison de la tension des rives n'est qu'une application particulièrement avantageuse car elle permet de s'affranchir des insuffisances des moyens habituels d'évaluation de la tension de la bande dans ces zones.

L'invention sera mieux comprise au vu de la description qui suit, faisant référence aux planches de dessins annexés suivants :

– la figure 1 qui est une représentation schématique en coupe d'un dispositif pouvant être utilisé pour la mise en oeuvre du procédé selon l'invention ;

– la figure 2 qui représente une variante d'exécution du corps de frappe faisant partie du dispositif précédent ;

– la figure 3 qui représente schématiquement une autre variante d'exécution du dispositif ;

– la figure 4 qui est une vue en coupe parallèlement à l'axe de défilement de la bande d'une rangée de corps de frappe ;

– la figure 5 qui est une vue en coupe partielle transversale par rapport à la bande, d'une rangée de corps de frappe ; et

– la figure 6 qui représente en vue de dessus un ensemble de trois rangées de corps de frappe destinés à la détermination de la répartition de la tension sur la largeur d'une bande.

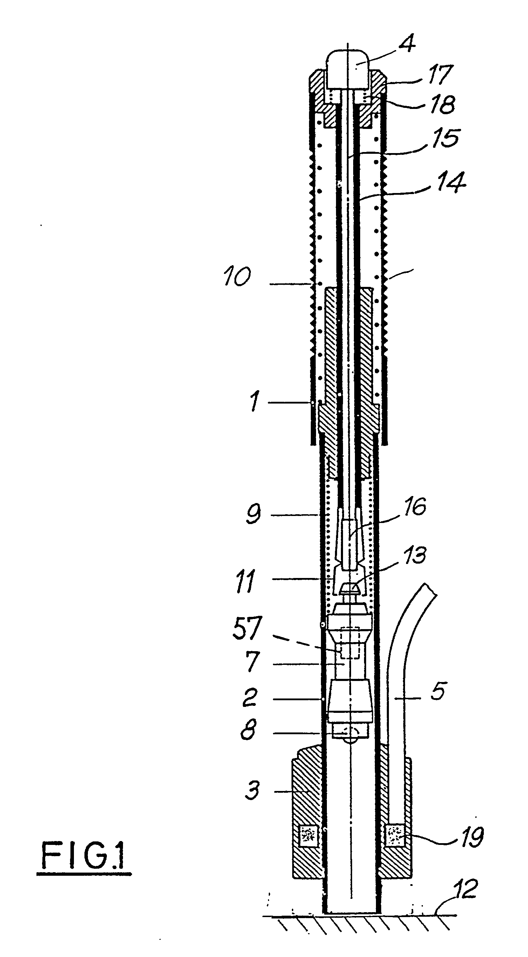

On voit sur la figure 1 un corps de frappe de type connu, notamment par le brevet français FR-2290660, qui est normalement destiné à la mesure de la dureté d'une éprouvette de matériau 12. Un tel corps de frappe est commercialisé en France sous le nom EQUOTIP par la société PROCEQ. Il comporte essentiellement un élément mobile de frappe 7 qui est muni d'une bille d'épreuve 8 et qui est monté à translation dans un tube de guidage 2. Cet élément mobile de frappe 7 est soumis à l'action d'un ressort de frappe 9 travaillant à la compression. Il renferme un aimant permanent 57.

L'élément mobile de frappe 7 comporte à son extrémité opposée à la bille d'épreuve 8 un élément 13 présentant un épaulement coopérant avec une pince de blocage 11. Cette pince de blocage 11 est montée à l'extrémité d'un tube 14 dans lequel peut coulisser un axe 15 qui est solidaire à son extrémité supérieure d'un bouton de déclenchement 4 et qui présente à son extrémité opposée un élément tronconique 16 permettant d'ouvrir la pince 11.

Le tube 14 est solidaire d'un tube de rechargement 1 qui est monté à coulissement sur le tube de guidage 2 et qui est maintenu en position haute au moyen d'un ressort de charge 10 travaillant en compression. Le tube de réarmement 1 comporte à son extrémité supérieure un logement 17 dans lequel le bouton déclencheur 4 est monté à coulissement et maintenu en position haute au moyen d'un ressort 18.

A sa partie inférieure, le tube de guidage 2 est fixé dans un porte-tube 3 qui est muni d'une bobine de mesure 19 fixe entourant l'élément de frappe 7 qui est reliée par un câble 5 à un instrument de mesure.

Le fonctionnement de ce corps de frappe connu est le suivant. Lorsque l'on appuie sur le bouton du déclencheur 4, la tige 15 descend, écarte la pièce 11 comme représenté sur la figure 1 et libère l'élément de frappe 7 qui, sous l'action du ressort de frappe 9 est déplacé vers l'éprouvette 12. La bobine 19 mesure la vitesse V1 de l'élément mobile 7 juste avant la percussion et sa vitesse V2 juste après la percussion d'après l'intensité des courants induits dans son enroulement par le déplacement de l'aimant 57 inclus dans l'élément mobile de frappe. Lorsque l'on utilise un tel corps de frappe sur une bande métallique en défilement, on obtient, grâce à l'appareil de mesure, une valeur caractéristique de la tension à laquelle est soumise l'éprouvette 12, qui peut être une bande métallique sous tension, sachant que celle-ci, pour un matériau de caractéristiques mécaniques données, est d'autant plus élevée que le rapport

$$\frac{V2}{V1}$$

est élevé.

Le réarmement de ce corps de frappe s'effectue en faisant coulisser le tube de réarmement 1 sur le tube 2 jusqu'à ce que la pince 11 vienne s'accrocher sur l'extrémité 13 de l'élément de frappe 7 ; on laisse ensuite remonter le tube 1 pour retrouver la position d'armement.

L'installation comprend également des moyens de mesure et de calcul non représentés de type connu (par exemple par le document FR-22 906 60 déjà cité) permettant:

– de mesurer à tout instant la tension U aux bornes de la bobine 19 et de détecter le sens du courant qui la parcourt lorsque l'élément de frappe 7 est en mouvement ;

– de détecter et de stocker la valeur nominale (en valeur absolue) U1 prise par U juste avant le choc de l'élément de frappe 7 avec la bande 12, et la valeur U2 prise par U juste après ce même choc au début du rebond du corps de frappe, U2 et U1 étant de signes contraires; le choc se traduit par une annulation brutale de U suivie d'un changement de son signe, puisque U suit les variations en signe et en intensité de la vitesse V du corps de frappe ;

– de calculer le rapport

$$\frac{U1}{U2}$$

– et de restituer à l'opérateur par des moyens non représentés la valeur du rapport

$$\frac{U1}{U2}$$

ou une grandeur représentative de ce rapport.

Le rapport

$$\frac{U1}{U2}$$

est une fonction directe du rapport

$$\frac{V1}{V2}$$

entre la vitesse V1 de l'élément de frappe avant son choc avec la bande et la vitesse V2 de l'élément de frappe après ce même choc, et est donc représentatif de l'énergie absorbée par la bande lors du choc. Comme on l'a vu précédemment, cette énergie absorbée dépend entre autres paramètres, de la tension de la bande. Si on répète l'essai en différents points de la largeur de la bande en défilement, en maintenant à l'identique les paramètres opératoires (les caractéristiques physiques de l'élément de frappe et sa vitesse initiale V1, la distance entre le boîtier et la bande), la comparaison des rapports

$$\frac{U1}{U2}$$

résultant des divers essais donne une image de la variation de tension de la bande sur sa largeur. En particulier, si des mesures sont effectuées au voisinage des deux rives du produit, on peut déterminer s'il est nécessaire de modifier la tension de la bande dans l'une de ces zones afin de la rendre égale à celle de l'autre zone. Cette possibilité de détecter avec précision une différence de tension entre les rives de la bande représente l'un des principaux avantages du procédé décrit par rapport aux procédés existants.

Dans l'utilisation de cette méthode, on peut se contenter de mesurer des valeurs du rapport

$$\frac{V1}{V2}$$

(ou de toute autre grandeur qui lui est liée telle que le rapport

$$\frac{U1}{U2}$$

précédemment défini) sur les différentes zones de la bande, et en déduire de manière qualitative s'il faut ou non apporter des modifications aux réglages du laminoir. La validité de telles modifications est ensuite testée grâce à une nouvelle série de mesures de

$$\frac{V1}{V2}.$$

On peut également franchir une étape supplémentaire en étalonnant le dispositif au préalable, c'est-à-dire en déterminant, pour un appareil de mesure donné et pour une nature et une vitesse de la bande données, quelles tensions de bande correspondent aux divers résultats possibles de la mesure de

$$\frac{V1}{V2}.$$

Une fois réalisé cet étalonnage, on peut obtenir une mesure quantitative de la tension de la bande dans la zone d'essai.

Le matériau constituant la partie terminale de l'élément de frappe doit être choisi de manière à limiter autant que possible la profondeur de l'empreinte de déformation plastique qu'il laisse sur la bande, voire à ne pas créer cette empreinte. Ce matériau n'est pas forcément métallique. Ce peut être du bois ou une matière plastique. Par des étalonnages périodiques de l'appareil on devra contrôler l'évolution éventuelle de ses propriétés mécaniques et en tenir compte dans l'interprétation des résultats des mesures. Au besoin, la partie terminale de l'élément de frappe pourra être remplacée. De préférence, la surface de cette partie terminale qui entre en contact avec la bande a une forme sphérique pour éviter de déformer ou de rayer la surface de la bande à l'endroit du contact.

Les vibrations de la bande en défilement peuvent exercer une influence perturbatrice sur le résultat de la mesure. En effet, si au moment de la mesure, le point d'impact de l'élément de frappe est en phase ascendante, l'élément de frappe reçoit une impulsion supplémentaire. Inversement, si le point d'impact est en phase descendante, le rebond du corps de frappe est atténué. Pour s'affranchir de ce phénomène, il est conseillé de réaliser plusieurs mesures successives de la tension de la bande et de prendre pour valeur de celle-ci la moyenne des résultats enregistrés.

Bien entendu, des modifications peuvent être apportées au dispositif décrit. Par exemple le tube 2 et la bande 12 peuvent être au contact l'un de l'autre. Ce contact doit s'effectuer avec le frottement le plus faible possible, grâce par exemple à une lubrification, ou à des roulements intégrés au boîtier.

D'autre part, le choc peut avoir lieu sur la surface inférieure de la bande. A la différence du cas précédent, la vitesse de l'élément de frappe est alors, sous l'influence de la gravité, décroissante avant le choc et croissante après le choc, ce dont on doit tenir compte dans le fonctionnement des moyens de mesure et de calcul : les instants auxquels sont mesurées V1 et V2 ne correspondent plus à des valeurs extrêmes de la vitesse du corps de frappe, mais à des instants où celle-ci varie brutalement.

Un autre méthode consiste à mesurer, par des moyens appropriés, l'intervalle de temps qui sépare les instants de passage de l'élément de frappe devant un repère fixe avant et après le choc. Toutes choses étant égales par ailleurs, plus cet intervalle est long, plus l'énergie absorbée par le choc est important, ce qui est l'indice d'une faible tension de la bande. Cette méthode permet indirectement d'avoir accès au rapport

$$\frac{V1}{V2}$$

défini précédemment.

Par ailleurs, si l'essai est effectué par percussion sur la surface supérieure de la bande, le dispositif de mesure basé sur la comparaison des vitesses de l'élément de frappe avant et après le choc peut être remplacé par tout dispositif permettant de mesurer la hauteur à laquelle rebondit l'élément de frappe après le choc. Cette caractéristique, toutes choses étant égales par ailleurs, est également représentative de l'énergie de l'élément de frappe absorbée par la bande du chocet fournit au même titre que le rapport

$$\frac{V1}{V2}$$

une indication sur la tension de la bande.

Enfin, du fait de l'impulsion perpendiculaire à la direction de déplacement de l'élément de frappe que donne la bande en défilement à l'élément de frappe lors du choc, le rebond de l'élément de frappe ne s'effectue pas selon une direction rigoureusement colinéaire à sa direction initiale. Ceci entraîne que l'élément de frappe vient frotter contre le tube de guidage 2 d'autant plus que l'impulsion perpendiculaire est forte. Ce phénomène peut gêner le déroulement de la mesure et détériorer l'appareil. On peut s'en affranchir en imprimant à l'élément de frappe une vitesse initiale V1 telle que la vitesse V2 après le rebond sera très largement supérieure à la vitesse de la bande et rendra négligeable la composante perpendiculaire du mouvement de l'élément de frappe lors de son rebond.

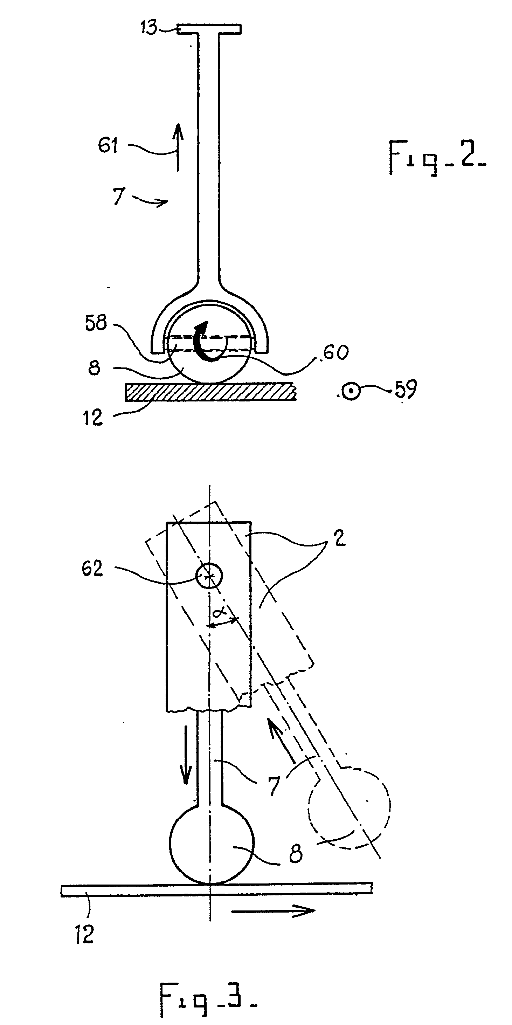

On peut aussi modifier l'élément de frappe 7 comme représenté sur la figure 2 (les autres organes du dispositif, identiques à ceux décrits précédemment, n'étant pas représentés ici) en permettant à sa partie terminale 8, constituée par une bille, de tourner librement autour d'un axe 58 solidaire de l'élément de frappe et orienté sensiblement perpendiculairement à la direction de déplacement de la bande 12, que le symbole 59 représente comme étant perpendiculaire au plan de la figure 2. Ainsi, l'impulsion donnée à l'élément de frappe par le défilement de la bande est transformée en énergie de rotation qui fait tourner la bille 8 autour de l'axe 58 comme indiqué par la flèche 60, et cette impulsion ne gêne pas ou très peu la colinéarité du rebond de l'élément de frappe 2 à la direction de l'élément de frappe avant l'impact, ce rebond étant symbolisé par la flèche 61. La bille peut également être remplacée par un cylindre dont l'axe se confond avec l'axe 58.

Les deux méthodes qu'on vient d'exposer sont utilisables quelles que soient les opérations de la bande et de l'instrument de mesure. Dans le cas où la bande se déplace horizontalement et où le mouvement de l'élément de frappe est vertical descendant, le dispositif peut également être modifié comme représenté sur la figure 3. Le tube de guidage 2 (dont la partie inférieure n'est pas représentée) est fixé sur un support rigide non représenté de manière à le maintenir, dans sa position initiale, à une distance déterminée et non nulle de la bande en défilement 12. Le tube 2 est fixé au support par l'intermédiaire d'un pivot de rotation fixe 62, sensiblement horizontal et perpendiculaire à la direction de défilement de la bande, autour duquel il peut tourner librement.

Jusqu'au moment de l'impact de la partie terminale 8 de l'élément de frappe sur la bande ( moment où le dispositif présente la configuration représentée en traits pleins sur la figure 3 ), tout se passe comme dans les exemples précédents. Ensuite, sous l'effet de l'impact, d'une part l'élément de frappe 7 remonte comme décrit précédemment à l'intérieur du boîtier avec une vitesse V2. Mais également le tube 2 tourne autour du pivot 62 sous l'effet de la composante horizontale donnée par la bande 12 au rebond de l'élément de frappe 7, composante qui est transmise au tube 2. Le tube 2 ( comme représenté en pointillés sur la figure 3 ) prend alors une inclinaison a par rapport à l'horizontale, dont la valeur maximale est fonction notamment des valeurs relatives de la vitesse V2 de l'élément de frappe après l'impact et de la vitesse de défilement de la bande. Un tel montage permet donc lui aussi de réduire les contraintes exercées sur l'élément de frappe, lors de son rebond, par les parties fixes du boîtier.

De plus, il est également possible de donner à la partie terminale de l'élément de frappe la configuration du type précédemment décrit comportant une bille pouvant tourner autour d'un axe solidaire de la tige du corps de frappe, afin d'atténuer encore davantage les effets du défilement de la bande sur le résultat de la mesure.

Afin de mesurer de manière simultanée ou quasi-simultanée la tension de la bande sur l'ensemble de sa largeur, on peut avantageusement utiliser le dispositif qui va être à présent décrit, comprenant une batterie de corps de frappe du modèle unitaire précédemment décrit et représenté sur la figure 1.

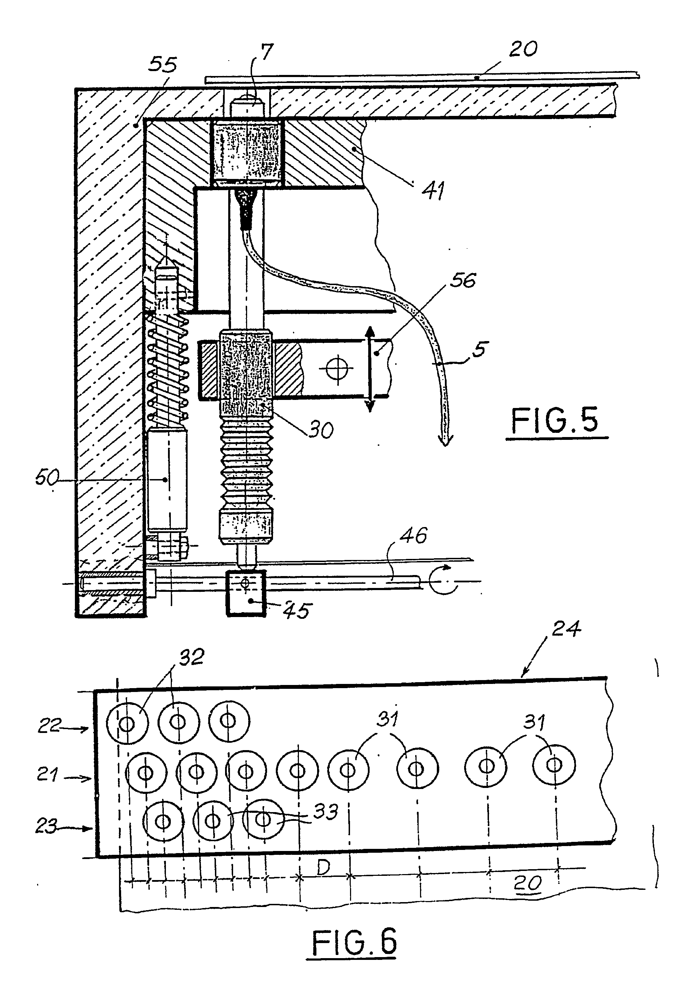

Conformément à l'invention, on dispose au moins une rangée de tels corps de frappe transversalement par rapport à une bande métallique en défilement 20 (voir figure 6) ; on peut, par exemple, prévoir une première rangée centrale 21 comportant des corps de frappe 31 répartis sur l'ensemble de la largeur de la bande 20. Etant donné que la détermination de la tension sur les rives de la bande 20 est particulièrement intéressante, on dispose, des deux côtés de la bande, deux rangées latérales 22 et 23 comportant par exemple trois corps de frappe 32, respectivement 33.

On voit que les corps de frappe de deux rangées voisines sont décalés transversalement. Ceci permet d'obtenir un pas de mesure inférieur à la distance minimale D séparant deux corps de frappe voisins d'une rangée. Ainsi avec une rangée centrale et deux rangées latérales, le pas de mesure au niveau des rives de la tôle 20 est égal au tiers de la distance D.

Les trois rangées 21, 22 et 23 sont disposées sur un banc de mesure 24 disposé transversalement par rapport à la bande 20. Préférentiellement, les différents corps de frappe d'une même rangée sont commandés de manière successive, le temps séparant deux mesures effectuées par des corps de frappe voisins étant suffisant pour que les vibrations et perturbations engendrées par la mesure effectuée par l'un deux n'aient plus d'influence sur celles effectuées ensuite par ses voisins. Un décalage semblable peut également exister entre les déclenchements de corps de frappe voisins appartenant à des rangées différentes.

On voit sur la figure 4 une vue en coupe transversale par rapport au banc de mesure 24, c'est-à-dire parallèlement au sens de défilement de la bande 20 d'une rangée de corps de frappe. Selon une caractéristique de l'invention, les corps de frappe 30 sont disposés sous la bande 20, la frappe s'effectuant de bas en haut. Ainsi, la surface de la bande reste libre et peut toujours subir un contrôle visuel ou par des moyens optiques quelconques. De plus, l'effet de la pesanteur lors du retour de l'élément de frappe augmente la sensibilité de l'appareil, au lieu de la diminuer comme dans le cas où les corps de frappe seraient disposés au-dessus de la bande.

Le corps de frappe comporte de manière connue le tube de réarmement 1, le tube de guidage 2, la pièce porte-bobine de mesure 3, le bouton de déclencheur 4, le câble 5 de liaison à l'appareil de mesure, l'élément mobile de frappe 7 et sa bille 8. Le tube 2 et la pièce porte-bobine 3 sont fixés sur un support fixe 41 et le tube de réarmement est solidaire d'une pièce mobile 42 qui est commune à tous les corps de frappe d'une même rangée et qui est guidée en translation verticale au moyen de deux guides latéraux 43 ; la pièce 42 est maintenue en position basse par des ressorts travaillant à la compression 44.

Le déclenchement de chacun des corps de frappe 30 est commandé par une came 45 portée par un arbre 46 disposé transversalement par rapport à la bande 20 et dont la rotation est commandée par des moyens non représentés.

Le réarmement des corps de frappe d'une rangée est obtenu au moyen de vérins 50 qui entraînent la pièce mobile 42 vers le haut à l'encontre des ressorts 44 en vue du réarmement de l'élément mobile 7.

Selon une caractéristique préférée de l'invention, on prévoit, au voisinage de l'extrémité du tube de guidage 2, des tampons maintenant la bande 20 lors de la percussion de manière à amortir les vibrations créées par la percussion. Ces vibrations sont particulièrement nocives pour les mesures effectuées au voisinage des rives de la bande, du fait des ondes renvoyées en écho par les rives. Dans l'exemple représenté, ces tampons sont constitués par des galets 47 dont l'axe est disposé selon la largeur de la bande 20 de manière que les galets 47 roulent librement sur cette dernière ; ces galets sont montées sur des supports à amortissement 48 comportant par exemple un ressort. Grâce à cette disposition, les vibrations entraînées par la percussion de l'élément mobile de frappe 7 sont rapidement amorties, ce qui permet de réduire notablement le temps séparant deux mesures successives tout en évitant les perturbations dues aux mesures précédentes.

Conformément à l'invention, on prévoit également un dispositif permettant de régler la course de l'élément mobile de frappe 7. Ce dispositif comprend un bouton moleté de réglage 49 agissant sur une tige 51 qui porte des pignons 52 de renvoi d'angle coopérant avec des pignons 53 portés par des tiges filetées 54 correspondantes vissées dans des poutres 55.

Lorsque l'on fait tourner le bouton moleté de réglage 49, on déplace l'ensemble des poutres 55, des pièces fixes 41 et des corps de frappe en translation verticale, ce qui permet de régler la course de frappe de la bille 8.

Sur la figure 5, qui est une vue en coupe partielle de l'extrémité d'une rangée de capteurs correspondant à la figure 2, on retrouve le corps de frappe 30, la pièce fixe 41, la came 45 portée par son arbre 46, le vérin de réarmement 50 et la poutre 55. On voit en outre sur cette figure un dispositif 56 qui est destiné à réaliser un réglage de la vitesse d'impact de l'élément mobile par réglage de la tension du ressort de frappe du corps de frappe. Ceci permet de régler la vitesse d'impact de l'élément mobile de manière à ce que celle-ci soit suffisamment faible pour que la mesure ne laisse pas d'empreinte sur le produit, sans pour autant compromettre la sensibilité de l'appareil.

En variante, l'élément mobile de frappe peut avoir la configuration particulière autorisant la rotation de sa partie terminale autour d'un axe qui a été précédemment décrite et représentée sur la figure 2.

D'autre part, les moyens de déclenchement des corps de frappe ne sont pas forcément constitués par des cames. Ils peuvent, en particulier, consister en des dispositifs électromagnétiques pouvant être commandés à distance, simultanément ou indépendamment les uns des autres de façon à permettre leur déclenchement non simultané.

Par ailleurs, les moyens de réarmement des corps de frappe peuvent être non pas mécaniques, comme on vient de le décrire, mais également fluidiques, par exemple pneumatiques.

Enfin, il est bien entendu que cette batterie de corps de frappe peut ne pas être répartie sur l'ensemble de la largeur de la bande, mais seulement sur des portions de celle-ci telles que ses rives. Elle peut alors agir en complément d'autres moyens habituels de mesure de la tension de la bande, actifs sur les portions restantes de celle-ci.

L'invention permet d'avoir très rapidement une image des différences de tension existant entre les différentes zones de la bande. Il est ainsi possible à l'opérateur d'agir sur les réglages de l'installation de manière à obtenir une tension aussi homogène que possible sur l'ensemble de la largeur de la bande, ce qui est l'un des éléments essentiels notamment pour l'obtention d'une bonne planéité de la tôle finale.

## Revendications

1. Procédé de détermination de la tension d'une bande métallique maintenue entre deux appuis, telle qu'une bande d'acier en défilement subissant un laminage, caractérisé en ce qu'on réalise une percussion de ladite zone de la bande par l'élément de frappe d'un corps de frappe, en ce que, avant la percussion, on imprime audit élément de frappe une vitesse d'impact reproductible, en ce que, après la percussion, on détermine l'énergie dudit élément de frappe qui a été absorbée par la bande lors de ladite percussion, et en ce qu'on corrèle le résultat de cette détermination à la tension de ladite zone de ladite bande.

2. Procédé selon la revendication 1, caractérisé en ce que, avant la percussion, l'élément de frappe a une trajectoire descendante, et en ce qu'on détermine l'énergie résiduelle de l'élément de frappe après la percussion en mesurant la hauteur maximale qu'il atteint après avoir rebondi sur la bande.

3. Procédé selon la revendication 1, caractérisé en ce qu'on mesure une grandeur représentative de la vitesse V1 de l'élément de frappe avant ladite percussion et une grandeur représentative de sa vitesse V2 après ladite percussion, et en ce qu'on détermine l'énergie résiduelle de l'élément de frappe après la percussion par le rapport

$$\frac{V1}{V2} \text{ ou}$$

une grandeur liée à ce rapport.

4. Procédé selon l'une des revendications 1 à 3, caractérisé en ce qu'on utilise un ensemble de corps de frappe disposés selon au moins une rangée sensiblement perpendiculaire au sens de défilement de la bande, et en ce qu'on réalise une détermination de la distribution de la tension sur la largeur de la bande.

5. Procédé selon la revendication 4, caractérisé en ce que les différents corps de frappe (31-33) sont commandés séparément de manière successive.

6. Procédé selon la revendication 4 ou 5, caractérisé en ce que les corps de frappe (31-33) sont disposés selon plusieurs rangées (21-23) adjacentes, les corps de frappe d'une rangée étant décalés transversalement par rapport aux corps de frappe de la rangée adjacente.

7. Procédé selon l'une des revendications 4 à 6, caractérisé en ce que les corps de frappe (31-33) sont disposés sous la bande (20).

8. Dispositif pour la détermination de la tension d'une zone d'une bande métallique (5) maintenue entre deux appuis, telle qu'une bande d'acier en défilement subissant un laminage, dispositif constitué par un corps de frappe comportant :
   – un tube de guidage (2) à l'intérieur duquel peut librement coulisser un élément de frappe (7) dont la partie terminale (8) est destinée à percuter la surface de la bande métallique (12) ;
   – des moyens (9) permettant d'imprimer audit élément de frappe une vitesse initiale donnée garantissant une vitesse reproductible de l'élément de frappe au moment où il percute la bande (12) ;
   – des moyens de détermination de l'énergie de l'élément de frappe (7) absorbée par la bande (12) lors de la percussion ;
   – et des moyens de restitution à l'opérateur du résultat de cette détermination ;
   dispositif caractérisé en ce que la partie terminale (8) de l'élément de frappe (7) possède une symétrie de révolution et est montée libre en rotation autour de son axe de révolution, ledit axe étant orienté transversalement à la direction de déplacement de l'élément frappe (7) dans le tube de guidage (2).

9. Dispositif selon la revendication 8, caractérisé en ce que l'axe de révolution de la partie terminale (8) est orientée perpendiculairement à la direction de déplacement de l'élément de frappe (7) dans le tube de guidage (2).

10. Dispositif selon la revendication 8 ou 9, caractérisé en ce que la partie terminale (8) de l'élément de frappe (7) est une bille traversée par son axe de révolution (13).

11. Dispositif selon la revendication 8 ou 9, caractérisé en ce que ledit axe de révolution est constitué par un pivot de rotation fixe (17) autour duquel le tube de guidage (2) peut tourner librement après la percussion de la bande (12) par l'élément de frappe (7).

12. Dispositif selon l'une quelconque des revendications 8 à 11, caractérisé en ce que lesdits moyens de détermination de l'énergie de l'élément de frappe (7) absorbée par la bande (12) lors de la percussion sont constitués par des moyens (19,57,5) de mesure et de comparaison des vitesses de l'élément de frappe avant et après ladite percussion.

13. Dispositif selon l'une des revendications 8 à 11, caractérisé en ce que lesdits moyens de détermination de l'énergie de l'élément de frappe (7) absorbée par la bande (12) lors de la percussion sont constitués par des moyens de mesure de l'intervalle de temps séparant les instants de passage de l'élément de frappe (7) devant un repère fixe avant et après ladite percussion.

14. Dispositif selon l'une des revendications 8 à 11, caractérisé en ce que lesdits moyens de détermination de l'énergie de l'élément de frappe (7) absorbée par la bande (12) lors de la percussion sont constitués par des moyens de mesure de la hauteur à laquelle rebondit l'élément de frappe (7) après ladite percussion.

15. Dispositif pour la mise en oeuvre du procédé selon l'une quelconque des revendications 1 à 7, caractérisé en ce qu'il comporte un ensemble de corps de frappe (30-33), des moyens (50) de réarmement des corps de frappe, et des moyens de déclenchement (45) des corps de frappe.

16. Dispositif selon la revendication 15, caractérisé en ce que lesdits corps de frappe sont du type selon l'une des revendications 8 à 14.

17. Dispositif selon la revendication 15 ou 16, caractérisé en ce que les moyens mécaniques de réarmement des corps de frappe comprennent au moins un vérin solidaire d'un élément mobile de réarmement de chaque corps de frappe.

18. Dispositif selon la revendication 15, caractérisé en ce que les moyens de déclenchement de chaque corps de frappe fonctionnent d'une manière décalée les uns par rapport aux autres.

19. Dispositif selon l'une des revendications 15 à 18, caractérisé en ce que les moyens de déclenchement de chaque corps de frappe sont constitués par une came (45), les cames (45) de commande des corps de frappe d'une rangée étant portées par un arbre (46) disposé transversalement par rapport à la bande.

20. Dispositif selon l'une quelconque des revendications 15 à 19, caractérisé en ce qu'il comporte, au voisinage d'au moins un corps de frappe, des tampons (47,48) exerçant une faible pression sur la bande.

21. Dispositif selon la revendication 20, caractérisé en ce que lesdits tampons sont constitués par des galets (47) dont l'axe est sensiblement perpendiculaire au sens de défilement de la bande et monté sur un support à amortissement (48).

22. Dispositif selon l'une quelconque des revendications 15 à 21, caractérisé en ce que les corps de frappe (30-33) sont munis d'un dispositif de réglage (49,51-54) de la course de l'élément de frappe (7).

23. Dispositif selon l'une quelconque des revendications 21 à 22, caractérisé en ce que les corps de frappe (31-33) d'une même rangée (21-23) sont montés sur un support commun (41,55) qui comporte un arbre (46) à cames de commande et un dispositif (50) de réarmement simultané des corps de frappe de la rangée.

FIG.1

Fig.2.

Fig.3.

FIG.4

FIG.5

FIG.6

Office européen
des brevets

**RAPPORT DE RECHERCHE EUROPEENNE**

Numero de la demande

EP 91 47 0008

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-4 034 603  (LECH et al.)<br>* En entier *<br>--- | 1,8 | G 01 L   5/04 |
| A | PATENT ABSTRACTS OF JAPAN, vol. 11, no. 219 (P-596)[2666], 16 juillet 1987; & JP-A-62 38 332 (TEIJIN LTD) 19-02-1987<br>* En entier *<br>----- | | |

**DOMAINES TECHNIQUES RECHERCHES (Int. Cl.5)**

G 01 L
G 01 N

Le présent rapport a été établi pour toutes les revendications

| Lieu de la recherche | Date d'achèvement de la recherche | Examinateur |
|---|---|---|
| LA HAYE | 25-06-1991 | ZAFIROPOULOS N. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.................................................
& : membre de la même famille, document correspondant

EPU FORM 1503 03.82 (P0402)